Europäisches Patentamt

European Patent Office

Office européen des brevets

(11) Veröffentlichungsnummer: **0 252 483**
**A2**

(12) **EUROPÄISCHE PATENTANMELDUNG**

(21) Anmeldenummer: 87109751.5

(22) Anmeldetag: 07.07.87

(51) Int. Cl.4: **D06P 1/22** , D06P 1/30 , C01B 21/093 , D06P 5/06

(30) Priorität: 11.07.86 DE 3623299

(43) Veröffentlichungstag der Anmeldung: 13.01.88 Patentblatt 88/02

(84) Benannte Vertragsstaaten: BE CH DE ES FR GB IT LI

(71) Anmelder: HOECHST AKTIENGESELLSCHAFT Postfach 80 03 20 D-6230 Frankfurt am Main 80(DE)

(72) Erfinder: Bernhardt, Heinrich Brüder Grimm Weg 6 D-6239 Kriftel(DE) Erfinder: Klein, Rudolf, Dr. Breslauer Strasse 24 D-6239 Kriftel(DE) Erfinder: Müller, Rolf,Dr. Dornbachweg 3 D-6367 Karben(DE)

(54) **Mittel zur Reoxidation von Färbungen mit Küpen-, Schwefelküpen- oder Schwefelfarbstoffen, Verfahren zu seiner Herstellung und seine Verwendung.**

(57) Durch ökologische Auflagen wird die Zahl der in der Praxis verwendbaren Oxidationsmittel ständig eingeengt. Chloramin T hat sich in dieser Hinsicht für die Entwicklung von Färbungen mit Schwefelfarbstoffen im alkalischen Medium an sich gut bewährt. Nachteilig für dieses Oxidationsmittel ist hingegen die Tatsache, daß es von der Natur her als gering lösliches, staubendes Pulver vorliegt, das Reizbelästigungen auf die Umgebung ausübt; seine Lösungen sind nur wenig konzentriert und beschränkt haltbar. Schließlich macht der hohe Preis eine breite Verwendung von Chloramin T für die angestrebte Aufgabe unwirtschaftlich. Erfindungsgemäß wurde nun gefunden, daß die N-Chlor-Verbindung vom Amidosulfonsäure, welche sich bei der Umsetzung von Sulfamat, Alkali und Chlorbleichlauge in wäßriger Lösung bildet, im Zuge der Farbstoff-Entwicklung nach ähnlichem Prinzip wie Chloramin T oxidierend wirkt, ohne dessen anwendungstechnische Mängel aufzuweisen. Entscheidend für die Überlegenheit des neuartigen Konzepts ist die Feststellung, daß das beanspruchte, oxidierend wirksame System auf einfache Weise im Oxidationsbad selbst hergestellt und ohne vorherige Isolierung daraus direkt zum vorgesehenen Einsatz gebracht werden kann.

## Mittel zur Reoxidation von Färbungen mit Küpen-, Schwefelküpen-oder Schwefelfarbstoffen, Verfahren zu seiner Herstellung und seine Verwendung

Die vorliegende Erfindung betrifft ein Mittel zur Reoxidation von Färbungen mit Küpen-, Schwefelküpen-oder Schwefelfarbstoffen im alkalischen Medium auf Basis von in der Wärme Aktivchlor (sog. positives Chlor Cl$^+$ mit der Oxidationszahl +1) liefernden Substanzen. Außerdem bezieht sich diese Erfindung auf ein Verfahren zur Herstellung des beanspruchten Oxidationsmittels und seine Verwendung zur Entwicklung von als substantive Leukoverbindung auf die Ware applizierten Farbstoffen der zuvor genannten Typen aufgrund der vom Mittel ausgehenden Oxidationswirkung.

Entsprechend den Angaben in der veröffentlichten europäischen Patentanmeldung EP-A-0 121 227 ist es wohl bereits bekannt, daß sich Schwefelfarbstoffe bei alkalischen Bedingungen unter Zuhilfenahme von N-halogenierten organischen Sulfonamiden, wie z:B. N-chlorierten Aryl-bzw. Alkylaryl-sulfonsäureamiden, auf der Faser oxidieren lassen. Vorzugsweise wird als ein derartiges Oxidationsmittel für die gattungsgemäße Behandlung der durch Verküpen löslich gemachten Farbstoffe Chloramin T, d.h. die N-Chlor-Verbindung von p-Toluolsulfonsäureamid-Natrium, eingesetzt. Während nun das Oxidationsverhalten dieser, aktives Chlor abspaltenden Chemikalie als zufriedenstellend zu bewerten ist, so haben sich hinsichtlich der Verwendbarkeit des Mittels in der Praxis jedoch zwei Mängel zuungunsten von p-Toluolsulfonsäure-N-chloramid-Natrium sowie anderen, strukturell ähnlichen Produkten ergeben:

1. p-Toluolsulfonsäure-N-chloramid-Natrium ist allein in seiner Beschaffenheit als Pulver ausreichend haltbar. Da es in dieser Form außerdem - schlecht wasserlöslich ist, lassen sich allenfalls nur niedrig konzentrierte, wäßrige Lösungen davon herstellen, die darüber hinaus bloß eine geringe Haltbarkeit aufweisen. Will man also mit der notwendigen Sicherheit einwandfreie färberische Ergebnisse erzielen, dann ist der Colorist auf das Produkt als Pulver angewiesen, das aber wiederum seinerseits durch Stauben, Geruch sowie Reizungen zur Belästigung des Bedienungspersonals beim Bereiten der Oxidationsbäder führt.

2. Nachteilig ist fernerhin, daß das Produkt für den beabsichtigten Zweck als Oxidationsmittel in vielen Fällen einfach zu teuer und daher wirtschaftlich nicht tragbar ist.

Der nachstehend erläuterten Erfindung lag also die Problemstellung zugrunde, ein Oxidationsmittel zu beschaffen, das als vollgültiger Ersatz für die herkömmlichen, auf dem besagten Arbeitsgebiet bislang benutzten Produkte dieser Art anzusehen ist und welches obendrein die zuvor aufgeführten anwendungstechnischen Unzulänglichkeiten nicht aufweist, wobei auf seine Umweltfreundlichkeit und seine Preiswürdigkeit besonderes Gewicht gelegt wurde. Gleichzeitig sollten praxisnahe Verfahren zum Herstellen und Verwenden des neuen Oxidationsmittels gefunden werden.

Die so umrissene Aufgabe wird erfindungsgemäß nunmehr dadurch gelöst, daß man sich das Oxidationsmittel aus einfachen und preiswerten Ausgangsstoffen, welche unter Bildung des oxidierend wirksamen Systems miteinander reagieren, jeweils vor dem Gebrauch in wäßriger Lösung, gewinschtenfalls in der für betriebliche Zwecke geeigneten Konzentration, und damit zugleich in ausreichender Haltbarkeit selbst herstellt und daß man die erhaltene frische Zubereitung - ohne vorherige Isolierung des Mittels in Substanz - dann unmittelbar der vorgesehenen Verwendung in der Oxidationsflotte zuführt oder sogar in dieser unmittelbar produziert.

Gegenstand der Erfindung ist somit ein Mittel zur Reoxidation von Färbungen mit Küpenfarbstoffen, Schwefelküpenfarbstoffen oder Schwefelfarbstoffen in alkalischem Medium, das aus einer alkalischen Lösung der N-Chlor-Verbindung von Amidosulfonsäure oder eines wasserlöslichen Salzes (Sulfamat), vorzugsweise des Natriumsalzes davon, besteht. Die wäßrige Lösung des erfindungsgemäßen Mittels kann zum Einstellen der erforderlichen Alkalität gegebenenfalls noch Natronlauge und/oder Soda enthalten.

Grundlage für die Zusammensetzung des beanspruchten Oxidationsmittels bildet vornehmlich die leicht lösliche Amidosulfonsäure $H_2N-SO_2-OH$ bzw. das Natriumsalz derselben, welches als sogenannte "Neutralsalzlösung" im Handel preisgünstig zur Verfügung steht. Vorteilhaft bei Anwesenheit von etwa 2-3 Mol NaOH setzt sich das Sulfamat mit reichlich Hypochlorit (1-2 Mol) zur N-Chlor-Verbindung von Amidosulfonsäure entsprechend dem Chemismus (in der freien Säureform angegeben)

$$H_2N-SO_2-OH + HOCl \rightarrow Cl-NH-SO_2-OH + H_2O$$

um (nach Kirk-Othmer, Encyclopedia of Chemical Technology, Third Edition, Volume 19, page 244).

Die Herstellung des erfindungsgemäßen Oxidationsmittels wird bei Normaltemperatur oder leicht erhöhter Temperatur bis zu etwa 40°C durch Vereinigen der Komponenten in Wasser vorgenommen. Dazu trägt man in eine kalte, wäßrige Lösung des Natriumsalzes von Amidosulfonsäure (Sulfamat), zweckmäßig in Gegenwart voon 50 - 1000 Mol-% NaOH, vorzugsweise von 150 - 400 Mol-% NaOH, unter zügigem Rühren 1 - 2 Mol Hypochlorit pro Mol des Sulfamats ein. Als Hypochlorit kommt hierfür in der Regel Natriumhypochlorit in Betracht, das gewöhnlich in Form der technischen Chlorbleichlauge eingesetzt wird, welche üblicherweise im Liter 147 bis 168 g NaOCl enthält, was einem Gehalt von 140 bis 160 g Aktivchlor im Liter entspricht.

Nach wenigen Minuten ist die Reaktion beendet. Die so gewonnene Lösung der N-Chlor-Verbindung von Amidosulfonsäure ist mehrere Tage lang haltbar; sie kann direkt zur Oxidation der Färbungen analog den bereits aus der EP-A-O 121 277 bekannten Bedingungen angewandt werden. Dabei wird das erfindungsgemäße Mittel je nach seiner Konzentration entweder unverdünnt oder aber verdünnt benutzt.

Die Maßnahmen zur Farbstoff-Entwicklung nach dieser Erfindung, gemäß denen man das mit den obigen Farbstoffen allein oder in Kombination untereinander behandelte Textilgut der oxidierenden Einwirkung einer wäßrigen Lösung der N-Chlor-Verbindung von Amidosulfonsäure bzw. eines Salzes davon aussetzt, werden bei pH-Werten oberhalb 8 durchgeführt; bevorzugt findet die Reoxidation im pH-Bereich zwischen 8 und 10 statt.

Hierbei ist es gleichgültig, in welcher Form, z.B. durch Klotzen bzw. Drucken oder nach der Ausziehtechnik, die genannten Farbstoffe zuvor auf die zu färbende Ware aufgebracht worden sind. Sie liegen unabhängig von der Art der Applikation nach der Fixierung in reduzierter Form auf der Faser vor und müssen jeweils durch Oxidation in den unlöslichen Zustand überführt werden. Vorteilhaft gelingt es, mit Hilfe des beanspruchten Verfahrens sogar Kombinationen aus den erläuterten Farbstoffen mit abweichendem Oxidationsverhalten betriebssicher zu reoxidieren.

Da der Zeitfaktor bei der erfindungsgemäßen Oxidationsweise ohne größere Bedeutung ist, kann das beanspruchte Verfahren zur Farbstoff-Entwicklung sowohl kontinuierlich als auch diskontinuierlich erfolgen. Im Falle der kontinuierlichen Arbeitstechnik sind Verweilzeiten des Färbegutes in den Entwicklungsbädern zwischen 5 und 120 Sekunden ausreichend.

Auch die Temperatur der Behandlungsflotte zum Reoxidieren ist verfahrensgemäß relativ unkritisch und kann je nach dem vorgrundierten bzw. vorgedruckten Farbstoff bzw. der Farbstoffkombination zwischen 15°C und 40°C schwanken.

Die Einsatzmenge an der erfindungsgemäß als Oxidationsmittel beanspruchten N-Chlor-Verbindung von Amidosulfonsäure bzw. eines Salzes davon richtet sich danach, ob kontinuierlich oder diskontinuierlich gearbeitet wird.

Das erfindungsgemäße Mittel und das erfindungsgemäße Verfahren sind für die Oxidation von Färbungen mit Küpenfarbstoffen, Schwefelküpen- und Schwefelfarbstoffen vorgesehen. Besonders geeignet ist es für die Oxidation von Schwefelküpenfarbstoffen (C.I. Vat Dyes) und von Schwefelfarbstoffen, unabhängig davon, ob sie als eigentliche Schwefelfarbstoffe (C.I. Sulphur Dyes) oder als lösliche Schwefelfarbstoffe (C.I. Leuco Sulphur Dyes bzw. C.I. Solubilised Sulphur Dyes) zugegen sind.

Die vorliegende Erfindung zur Farbstoff-Entwicklung ist prinzipiell anwendbar auf Textilmaterial, welches aus Cellulosefasern besteht oder solche enthält, also z.B. auf Cellulose-/Polyester-Fasermischungen, auf das vorgängig Farbstoffe der vorgenannten Typen in reduzierter Form aufgebracht und dort fixiert worden sind.

Das erfindungsgemäße Oxidationsverfahren besitzt mehrere Vorteile, es ist kostengünstig, ökologisch unbedenklich und führt auch bei schwierig oxidierbaren Schwefelfarbstoffen zu einer raschen, gleichmäßigen und vollständigen Oxidation. Es liefert klare Farbtöne, und Schwierigkeiten bezüglich der Farbtonkonstanz treten nicht auf.

Die in den nachfolgenden Vorschriften bzw. Beispielen aufgeführten Prozentangaben bedeuten Gewichtsprozente, sofern nicht abweichend davon ausgesagt ist.

Vorschriften für die Herstellung des Oxidationsmittels:

Vorschrift 1

Liegt beispielsweise eine handelsübliche 40 %ige, wäßrige Lösung von Natrium-sulfamat (Neutralsalz) (= 3,36 Mol/l) vor, so versetzt man diese Lösung mit 250 ml/l Natronlauge (32,5 %ig) und fügt dann 800 ml/l Chlorbleichlauge mit einem Gehalt an 15 % aktivem Chlor unter Rühren hinzu. Nach 5-minütiger Reaktionsdauer kann die resultierende Lösung in das Oxidationsbad eingebracht und zur Farbstoff-Entwicklung verwendet werden.

Für die Reoxidation im Ausziehprozeß werden 2-10 ml vorstehender Lösung von N-Chlor-sulfamat-Natrium pro Liter der Oxidationsflotte benötigt. Die Oxidation unter diskontinuierlicher Prozeßführung wird vorzugsweise bei 30°C durchgeführt.

Bei der zuvor erwähnten Zubereitung des Oxidationsmittels kann man natürlich je nach den betrieblichen Gegebenheiten auch von höher verdünnten Lösungen des Na-Sulfamats ausgehen.

Vorschrift 2

Im Falle der kontinuierlichen Prozeßführung zur Oxidation von Färbungen ist es vorteilhaft, das Oxidationsmittel direkt im Oxidationskasten einer Breitwaschmaschine anzusetzen.

Dazu werden in diesen Kasten zunächst 5-10 ml/l der 40 %igen, wäßrigen Sulfamat-Lösung sowie 1,25-2,5 ml/l Natronlauge (32,5 %ig) und hernach 3-8 ml/l der 15 % aktives Chlor enthaltenden Chlorbleichlauge eingetragen. Die so hergestellte Oxidationsflotte ist nach Ablauf von 3-5 min unmittelbar verwendungsfähig. Sie wird für den Oxidationsvorgang auf eine Temperatur um 30°C eingestellt.

Zum Nachstärken des an N-Chlor-sulfamat-Natrium verarmten Bades verwendet man im Zuge dieser Arbeitsweise vorteilhaft die bereits oben beschriebene, konzentriertere Lösung des Oxidationsmittels in Mengen von 1-3 ml pro Liter an zu ersetzender Flotte.

Anwendungsbeispiele für die Maßnahmen zur Farbstoff-Entwicklung:

Beispiel 1

150 kg Baumwollgarn auf Kreuzspulen werden im Garnfärbeapparat bei einem Flottenverhältnis von 1 : 10 sowie unter wechselnder Zirkulationsrichtung mit einer wäßrigen Flotte behandelt, die - bezogen auf das Gewicht der trockenen Ware -

16 % des Farbstoffes Sulphur Red 6 mit der C.I.-Nr. 53720, in färbefertiger Form, sowie
5 ml/l einer 31 %igen, wäßrigen Natriumhydrogensulfid-Lösung (I),
5 ml/l einer wäßrigen Lösung von 20 % $Na_2S_x$ (x = 2-5), 14 % $Na_2S$ und 3 % $Na_2S_2O_3$ (II),
1 g/l Soda kalz. (III),
2 ml/l eines schaumarmen, anionischen Netzmittels (IV) und
20 g/l wasserfreies Natriumsulfat

enthält.

Zur Durchführung der Ausziehfärbung wird der Spulenfärbeapparat mit der trockenen Ware beschickt, man setzt nun das Bad bei 30°C mit den Hilfsmitteln (I-IV) an, läßt diese Zirkulationsflotte 10 min vorlaufen und fügt dann den Farbstoff hinzu. Danach erhöht man die Badtemperatur auf 90°C und setzt 10 min nach Erreichen der eingestellten Färbetemperatur das Natriumsulfat zu. Nach weiteren 35 Minuten Färbezeit bei 90°C kühlt man das Bad samt der Ware auf 70°C ab, worauf das Färbegut mit Wasser im Überlauf klargespült wird. Anschließend läßt man das Bad ab.

Für die Farbstoff-Entwicklung wird ein wäßriges Oxidationsbad unter Zusatz von

4 ml/l der Lösung des gemäß Vorschrift 1 hergestellten Oxidationsmittels

frisch zubereitet und die Färbeanlage mit dieser Flotte beschickt. Unter in-Gang-setzen der Zirkulation oxidiert man nun den auf der Ware als Leukoverbindung fixierten Farbstoff während 10 min bei 40°C, spült die Färbung mit Wasser und stellt dieselbe wie üblich fertig.

Auf diese Weise erhält man eine gleichmäßige, gut oxidierte Färbung auch bei dem bekanntermaßen schwer oxidierbaren Farbstoff. Führt man hingegen die Oxidation des gleichen Farbstoffes in bekannter Weise bei pH 9-10 mit Hilfe von Wasserstoffperoxid durch, dann wird auf der gefärbten Ware leicht eine sogenannte Deckenbildung verursacht, bei der die äußeren Lagen der Kreuzspulen dunkler als die Innenlagen gefärbt sind.

Beispiel 2

Eine Partie von 1200 m Baumwollköper soll kontinuierlich gefärbt werden. Dazu wird ein wäßriges Klotzbad angesetzt, welches

150 g/l des Farbstoffes Sulphur Red 6 mit der C.I.-Nr. 53720, in färbefertiger Form,
5 ml/l einer 31 %igen, wäßrigen Natriumhydrogensulfid-Lösung,
3 ml/l einer wäßrigen Lösung von 20 % $Na_2S_x$ (x = 2-5), 14 % $Na_2S$ und 3 % $Na_2S_2O_3$,
1 g/l Soda kalz. sowie
2 ml/l eines schaumarmen, anionischen Netzmittels

enthält und auf eine Temperatur von 25°C gebracht.

Mit einer so bereiteten Flotte klotzt man nun die Ware bei einer Flottenaufnahme von 80 % (bezogen auf das Gewicht der trockenen Ware), dämpft das Farbgut sodann kontinuierlich 1 min im Sattdampf bei 102°C und spült die Ware anschließend mit kaltem Wasser in 4 Waschabteilen einer Breitwaschmaschine.

Die Farbstoff-Entwicklung durch Oxidation erfolgt ebenfalls in einem Abteil der Breitwaschmaschine, das ein wäßriges Bad von

6 ml/l der Lösung der gemäß Vorschrift 2 hergestellten Oxidationsmittels

enthält und auf 30°C erwärmt ist, wobei für den Durchlauf der Ware eine Verweilzeit von 20 s eingehalten wird. Dieses Oxidationsbad wird laufend mit einer wäßrigen Lösung von

1-3 ml/l der Oxidationsmittellösung gemäß Vorschrift 1

nachgeschärft. Abschließend wird die Färbung mit Wasser wiederum warm (40°C) und kalt gespült (3-4 Waschkasten) und wie üblich fertiggestellt.

Trotz der schweren Oxidierbarkeit des verwendeten Farbstoffes ist die so erzeugte Färbung einwandfrei oxidiert, wie Vergleiche mit auf bekannte Weise sorgfältig oxidierten Proben ergeben haben.

Beispiel 3

Beispiel 2 kann auch folgendermaßen durchgeführt werden: Vor Beginn der Färbung werden der ca. 30°C warmen, wäßrigen Flotte in dem für die Oxidation vorgesehenen Kasten der Breitwaschmaschine

10 ml/l der 40 %igen, wäßrigen Sulfamat-Lösung,
2,5 ml Natronlauge (32,5 %ig) und
8 ml/l Chlorbleichlauge (15 % aktives Chlor)

zugefügt. Nach ca. 5 min Reaktionsdauer kann die zu oxidierende Ware in das Bad eingefahren werden.

Als Nachsatz verwendet man die Lösung des Oxidationsmittels gemäß Vorschrift 1 in den angegebenen Mengen.

**Ansprüche**

1. Mittel zur Reoxidation von Färbungen mit Küpenfarbstoffen, Schwefelküpenfarbstoffen oder Schwefelfarbstoffen in alkalischem Medium, bestehend aus einer alkalischen Lösung der N-Chlor-Verbindung von Amidosulfonsäure oder eines wasserlöslichen Salzes (Sulfamat), vorzugsweise des Natriumsalzes davon.

2. Mittel nach Anspruch 1, dadurch gekennzeichnet, daß es aus einer alkalischen Lösung des Umsetzungsproduktes von 1 Mol Natriumsalz der Amidosulfonsäure (Sulfamat) mit 1 - 2 Mol Natriumhypochlorit besteht.

3. Mittel nach Anspruch 1 oder 2, dadurch gekennzeichnet, daß die Alkalität der Lösung mittels Natronlauge und/oder Soda eingestellt ist.

4. Verfahren zur Herstellung des Mittels eines oder mehrerer der Ansprüche 1 bis 3, dadurch gekennzeichnet, daß man das Natriumsalz von Amidosulfonsäure (Sulfamat) in Form einer kalten, wäßrigen Lösung, zweckmäßig in Gegenwart von 50 - 1000 Mol-% NaOH, vorzugsweise von 150 - 400 Mol-% NaOH, mit 1 - 2 Mol Natriumhypochlorit pro Mol des Sulfamats zur Umsetzung bringt.

5. Verfahren nach Anspruch 4, dadurch gekennzeichnet, daß man das Natriumhypochlorit in Form von Chlorbleichlauge einsetzt.

6. Verfahren nach Anspruch 4 oder 5, dadurch gekennzeichnet, daß man das Mittel in der Gebrauchskonzentration direkt im Oxidationsbad, besonders im Oxidationskasten einer Breitwaschmaschine ansetzt.

7. Verfahren zur Reoxidation von Färbungen mit Küpenfarbstoffen, Schwefelküpenfarbstoffen oder Schwefelfarbstoffen, welche zuvor in reduzierter Form auf ein Cellulosefasern enthaltendes Textilmaterial aufgebracht und dort fixiert worden sind, durch Einwirkung einer wäßrigen Lösung eines Oxidationsmittels im alkalischen Bereich, dadurch gekennzeichnet, daß man eine alkalische Lösung verwendet, die aus dem Mittel nach einem oder mehreren der Ansprüche 1 bis 3 besteht oder dieses Mittel enthält.